# NEW EUROPEAN PATENT SPECIFICATION

(11) **EP 0 251 626 B2**
(45) Date of publication and mention of the opposition decision: **06.12.2000**
(45) Mention of the grant of the patent: 12.01.1994
(21) Application number: 87305529.7
(22) Date of filing: 22.06.1987
(51) Int. Cl.: H04N 7/04

(54) **Transmission system for audio-data signals to accompany transmitted video signals**
System zum Übertragen von Audio-/Datensignalen zum Begleiten von übertragenen Videosignalen
Système de transmission de signaux de son/données pour accompagner des signaux vidéo transmis

(30) Priority: 23.06.1986 GB 8615308
(43) Date of publication of application: 07.01.1988
(73) Proprietor: THOMSON multimedia Sales UK Limited, Enfield, Middlesex EN1 1DZ (GB)
(72) Inventor: Holmes, Stuart Jackson, Bingley West Yorkshire (GB); Thompson Geoffrey, Bradford West Yorkshire BD9 6NL (GB)
(74) Representative: Hartnack, Wolfgang

(56) References cited:
- EP-A- 0 127 136
- US-A- 3 795 763
- US-A- 4 281 355
- NHK LABORATORIES NOTE, no. 282, November 1982, pages 1-13, N.H.K., Tokyo, JP;TAKEHIKO YOSHINO et al.: "PCM sounds on digital subcarrier in television for a satellite broadcasting system"
- PATENT ABSTRACTS OF JAPAN, vol. 8, no. 99 (E-243)[1536], 10th May 1984 & JP-A-59 17 750
- IEEE TRANSACTIONS ON CONSUMER ELECTRONICS, vol. CE-31, no. 1, February 1985,pages 24-31, IEEE, New York, US; H. UKAI et al.: "Sound PCM decoder LSIs forJapanese DBS"
- IEEE TRANSACTIONS ON CONSUMER ELECTRONICS, vol. CE-30, no. 3, August 1984,pages 265-271, IEEE, New York, US; TAKAO ARAI et al.: "Receiver for DBS with digital audio signals"
- RUNDFUNKTECHNISCHE MITTEILUNGEN, vol. 29, no. 1, January-February 1985, pages 23-35, Noderstedt, DE; C. DOSCH: "C-MAC/PAKET - Normvorschlag der Europäischen Rundfunkunion für den Satellitenrundfunk"
- IEEE TRANSACTIONS ON CONSUMER ELECTRONICS, vol. CE-30, no. 3, August 1984, pages 462-466, IEEE, New York, US; YUICHI KOJIMA et al.: "A new digital audio and data transmission system using the CATV network"
- WIRELESS WORLDS, vol. 90, no. 1582, July 1984, pages 17-19, Oldhill, Dunstable,GB; E.H. HARTWELL: "Digital stereophony with television"
- BBC Research Department Report, vol 15, 1985.
- Draft Specification of Standards for UK Stereo with Television Transmissions, Rev. 1
- IEEE Transactions on Consumer Electronics, Vol. CE-31, No. 1, February 1985, pages 24-31, New York, US, Ikai et al.: "Sound PCM Decoder LSI's for Japanese DBS"
- IEEEE Transactions on Consumer Electronics, Vol. CE-30, No. 3, August 1984, pages 265-271, New York, US, Arai et al.: "Receiver for DBS with Digital Audio Signals"
- Rundfunktechnische Mitteilungen, Vol. 29, No. 1, Janaury 1985, pages 23-35, Noderstedt, DE, Dosch: "C-MAC/PAKET Normvorschlag der Europäischen Rundfunkunion für den Satellitenrundfunk"
- Wireless Worlds, Vol. 90, No. 1582, July 1984, pages 17-19, Dunstable, GB Hartwell: "Digital Steeophony with Television"
- Funkschau, 18/1985, pages 59-63
- BBC Research Department Report, Vol. 15, 1985

## Description

The present invention relates to transmission of audio signals to accompany transmitted video signals, in which system the audio/data signals comprise a stream of digital elements formed into a plurality of frames, each frame comprising sections, namely a section to indicate a start of a frame, a section to contain control information, a section to contain additional data and a section to contain the audio/data information, whereby the audio signal is transmitted with the audio/data information section. Such a system is described in NHK Laboratories note, No. 282, November 1982, pages 1 - 13, NHK, Tokyo, JP; Takihiko Yoshino et al: "PCM Sounds on Digital Subcarrier and Television for a Satellite Broadcasting System".

From BBC Research Department Report 1985, Vol. 15, page 5, it is known to code audio/data signals as a multiple bit sample word, each word having an associated parity bit.

A proposed transmission system (see Draft Specification of Standards for UK Stereo with Television Transmissions, Rev. 1, dated 1.8.84) for stereo signals to accompany conventional television transmissions provides a serial data stream partitioned into 728-bit frames, each transmitted in a millisecond. Each frame has: a first section of eight bits comprising a Frame Alignment Word (FAW) which marks the start of the frame; a second section of four bits which provide control information, being one flag bit (namely Cₒ, which alternates between 0 and 1 every 8 milliseconds to determine odd and even frames over a 16 frame sequence) and three mode bits (namely C₁, C₂, and C₃, which indicate the nature of the transmitted signal, e.g. mono, stereo, dual-language, data); a third section of twelve bits of additional data, independent of the control information bits; and finally a fourth section of sixty-four 11-bit words corresponding to the audio (or data if appropriate) being transmitted, this last section having a total of 704 bits.

In each frame as transmitted, interleaving is applied to the block of 720 bits which follow the FAW in order to ensure that adjacent bits are not transmitted seqentially so as to minimise the effect of multiple-bit errors. The interleaving pattern places data bits, which are adjacent in the frame structure as output by the television receiver, in positions at least 16 clock periods apart in the transmitted bit stream (i.e. at least 15 other bits occur between bits which are adjacent in the output frame structure). The interleave depth in this reference is 45 bits.

In the production of the sound signals, they are sampled at 32 kHz and coded initially with a resolution of 14 bits per sample. For transmission, the number of bits per sample is reduced to 10, using near-instantaneous companding, and one parity bit is added to the end of each 10-bit sample word for error detection and scale-factor signalling purposes, thereby resulting in the 11-bit words in the fourth section of the frame.

In the operation at a television receiver to derive the appropriate range value (corresponding to the scale-factor) of a transmitted signal, the provision of the interleaving structure means that a parity bit may be received before some of the bits of the relevant word; accordingly, a frame is de-interleaved and stored before the range-determining operation is started.

The Applicants have now appreciated that interleaving of all the frame other than the FAW is not necessary; for example, only the audio/data information section may be interleaved during transmission. A reduction in the amount of a frame which is transmitted in interleaved form results in a decrease in the amount of processing required at the television receiver, thereby simplifying the circuitry therein and reducing the product costs.

The invention is defined by the claims.

Preferably the system includes means to compare, after transmission, the non-interleaved sections of a number of adjacent frames, thereby to determine any errors in the non-interleaved sections (for example caused during transmission). In this way, the non-interleaved sections of a frame can be protected as well as, or even better, than the interleaved section while still providing simplified processing at the television receiver.

In order that the invention may more readily be understood, a description is now given, by way of example only, reference being made to the accompanying drawings in which:-
Figure 1 is a block diagram of a transmission system embodying the present invention;
Figure 2 is a schematic representation of the structure of a stereo signal for use in the system of Figure 1;
Figure 3 is a schematic diagram of part of a television receiver of the system of Figure 1;
Figure 4 is a circuit diagram of part of a television receiver of the system of Figure 1;
Figure 5 is a schematic diagram of a further part of a television receiver of the system of Figure 1; and
Figure 6 is a representation of waveforms in connection with the feature of Figure 5.

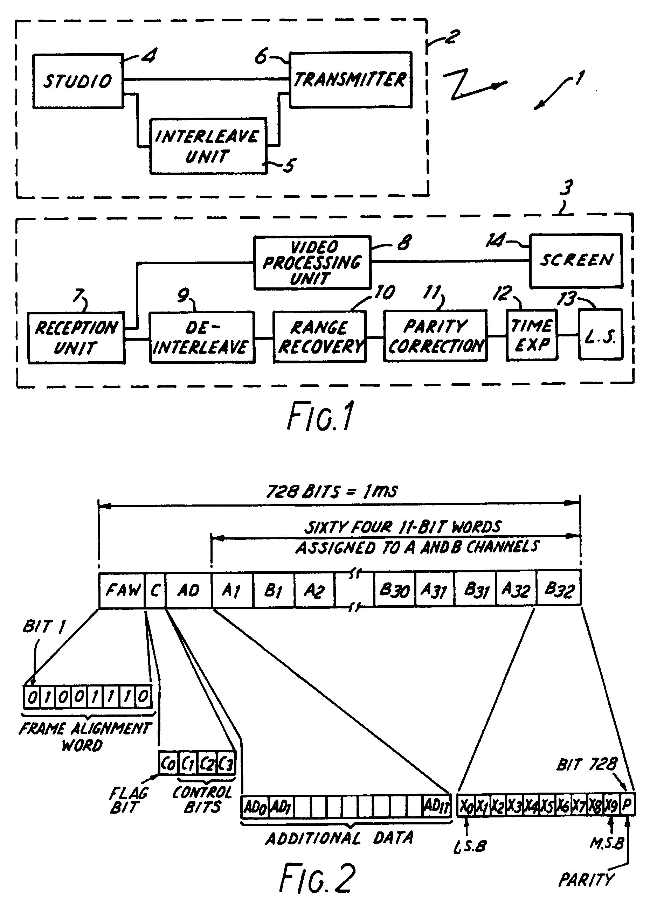

In Figure 1, there is shown a transmission system 1 for the transmission of PAL System-I television signals accompanied by an additional stereo signal for enhanced audio reception. The system includes a transmission station 2 and a number of television receivers of which only one, referenced 3, is shown. Receiver 3 may be a conventional PAL television receiver connected with a decoder unit specifically designed to process the stereo signal and reproduce the stereo sound at, or for, the receiver; alternatively, the receiver may be specifically designed to process the stereo signal as well as, or instead of, processing the audio signal incorporated in the PAL System-I signal.

Transmission station 2 has a studio 4 which provides a recording consisting of a channel of video signals (incorporating the normal audio component) in accordance with the System-I PAL standard, and a channel of stereo signals of a format as shown in Figure 2. Signals of this stereo channel are passed to an interleaver unit 5 which interleaves the audio data within each frame, and then passes the resultant signals to a transmitter 6 which broadcasts the PAL video channel and the stereo channel, the latter having a carrier frequency 6.552 MHz above the frequency of the transmitted vision carrier.

The combined signal passes to a reception unit 7 at television receiver 3, and is separated out again into the PAL video channel (the subsequent processing of which at video processing unit 8 is conventional and therefore a description is not pertinent) and the stereo channel which is input to a de-interleaver unit 9 for re-arrangement of the bits, in the audio data section of each frame to their original sequence before input to interleaver unit 5. A range recovery unit 10 inspects each word and its corresponding parity bit in order to determine whether there is compatability, from which information it derives a three-bit range value for that frame. Thereafter a parity correction unit 11 effects any necessary alterations to the words in view of the results of the compatability inspection, a time expansion unit 12 increases the duration of the audio words to account for the other sections in a frame and the resultant signal passes to a loudspeaker unit 13 for output synchronized with display of the signal on the video channel at cathode ray tube screen 14.

Figure 2 shows the structure of one frame of the signal in the stereo channel of transmission system 1 before interleaving. The sixty-four words in the audio information section are arranged such as to alternate between the two output signals of the stereo channel, i.e. the first, third and subsequent odd words are associated with output signal A (e.g. the lefthand side signal) of the stereo channel, while the second, fourth and subsequent even words are associated with output signal B (e.g. the righthand side signal) of the stereo channel. Thus 32 words for each output signal of the stereo channel are transmitted in every frame.

The system 1 is capable of transmitting signals other than stereo signals on this channel; thus for example this channel may carry mono audio signals (these being of higher quality than those incorporated with the conventional PAL video signal) in one language or more, or data signals representing information other than sound and optionally related to the television display.

After interleaving at unit 5, the structure of the 728 bits in a frame is as shown in the Table 1 given below, in which the numbers relate to the original position before interleaving. In this Table, the bits in the audio information section have been laid out in a lattice form to show clearly the interleaving structure; of course, in the signal itself, this section has a continuous sequence of bits formed by reading left to right along a row, the rows being taken from the top downwards.

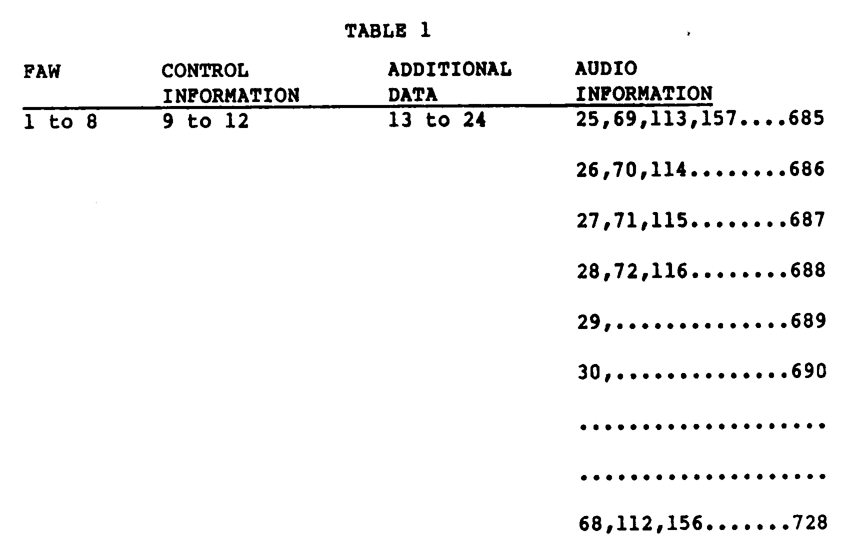

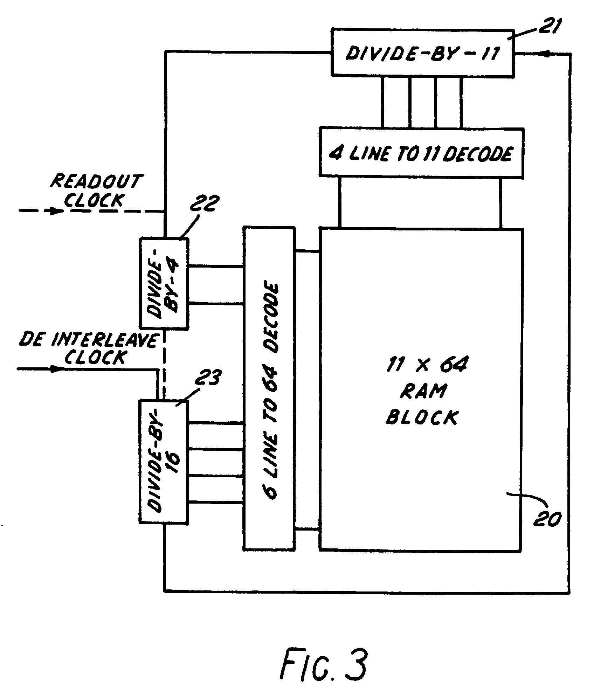

The de-interleave unit 9 has a switch unit to direct incoming frames alternately to two RAM stores, each of which corresponds to the arrangement shown in Figure 3 whereby a 11 by 64 RAM block 20 has a divide-by-11 counter 21, a divide-by-four counter 22 and a divide-by-16 counter 23.

Since the RAM block 20 has 64 rows by 11 columns, a divide-by-64 counter and a divide-by-11 counter are required for addressing. In the write mode the divide-by-64 counter is formed of counter 23 and counter 22. With all the counters initially containing 0, the print clock pulse changes the number in counter 23 to 1 and the decoder selects row 4 while the decoder output of counter 21 selects column 0. The second clock pulse changes the number in counter 23 to 2, which is decoded as row 8, the third clock pulse changes the number to 3 which is decoded as row 12, and so on. In this way rows 0,4,8,16 and so on to 60 are addressed in turn while column 0 continues to be addressed. After row 60 column 0 has been addressed, the next clock pulse resets counter 23 to 0 and the overflow pulse clocks counter 21 to 1. Rows 0,4,8 16 and so on to 60 are now again addressed in turn but with column 1 addressed. This continues until row 60 column 10 has been written. The next clock pulse produces an overflow from counter 21 which clocks 1 into counter 22. The number is added to the row count of counter 23, so the addressed rows are row 1,5,9, 17 and so on to 61. When row 61 column 10 has been written, the overflow from counter 21 changes the number in 22 to 2, and so on. In this way the data bits are stored in the RAM in de-interleaved order and can be read out by simply addressing each of the rows in turn using the divide-by-64 counter formed by the divide-by-16 counter 23 and the divide-by-4 counter 22. Since the 11 bits of a word are read out in parallel, the divide-by-11 counter 21 is not needed for read-out and the same counter can therefore be used to address the second RAM which writes while the first is being read.

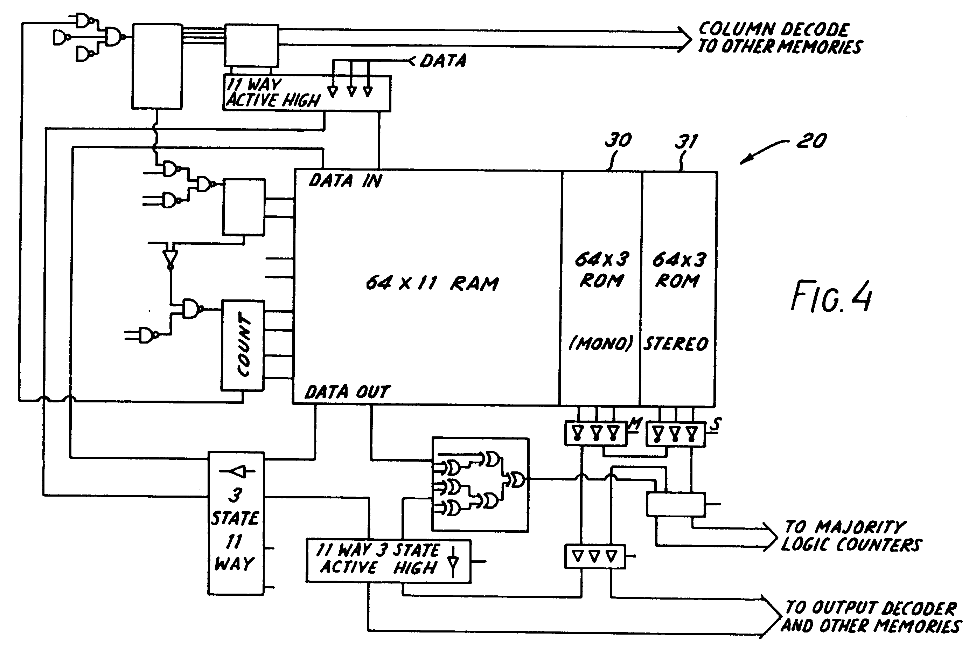

There is shown in Figure 4 a circuit diagram of the memory organization and address logic of a store 20 and its associated electronic circuits and components in greater detail than shown by Figure 3. Store 20 includes two 64 x 3 ROM's 30, 31, one being used for range recovery in mono signals, and one being used for range recovery in stereo signals.

In a modification, only one divide-by-11 counter is used, being multiplexed between all the memories. Also a ROM, associated with the RAM area, is used for range word testing. The use of ROM reduces the amount of chip area which would otherwise have to be employed in the range word test logic. Also the ROM information is held in binary form so that only three rather than six select lines need to be routed around the IC to the majority logic counters. This again is a saving in chip area. Additionally, a ROM/RAM structure may be of a design so that every word of RAM also accesses a six bit word of ROM. By customising a ROM/RAM system only one row decoder needs to be included. By multiplexing the range test circuitry only one set of majority logic counters need be included in the integrated circuit.

Using the interleaved structure shown in Table 1, the information and parity bits of each word are transmitted in the correct order, i.e. the least-significant-bit first and the parity bit last. Thus, as soon as the parity bit has been received the value of its range bit can be determined and sent to the majority logic. With the stores organised in a 64 row by 11 column format, all the received parity bits can be stored in the same column and the action of writing in that column indicates that the parity check can be made on the word in that row. The range bits are therefore determined in real-time rather than after the complete frame has been stored; so read-out can begin immediately and the store will be free by the time the third frame begins to arrive, thereby ensuring that a third store is unnecessary for the processing of stereo signals. A third store is necessary for the processing of "simultaneous dual - language reception" signals, but again the described arrangement provides a reduction in storage necessary, in that conventional processing techniques for such signals require four stores.

There are many instances in the receiver 3 where majority logic must be performed, this being achieved by the use of a counter which can be incremented every time the input is say a "1" and decremented whenever the input is a "0". At the end of the input sequence a test for positive or negative count will give a majority decision of the input sequence.

Alternatively, the counter may be simply incremented when the input is say a "1" and no action taken when the input is in the alternative state. At the end of the input sequence the output of the count can be checked to see if it is greater than a particular value e.g. half the number of input pulses. If it is greater, then the output is one state; if it is less, the majority is the alternative state.

Sound muting which avoids unacceptable clicking of the loudspeaker may be achieved by shifting the output signal right or left with respect to the least significant bit by means of a parallel-to-serial output circuit programmed to shift left or right depending on whether a mute or demute was required.

Because of the structure of the conventional interleave system, it was not possible to do a test range bit operation until the whole of the frame had been transmitted since it was not known when a complete word of information had been written to the memory. However, with the new interleave structure, the rows in the memory fill up left to right hence whenever writing to the last column is necessary, it is implicit in the interleave that all the rest of the data for that word has been previously transmitted. Hence if a detection system is used to identify a last column write by simply looking at an output from the address decoder on the last column, then a read/write operation can be performed and a test range bit generated. When all the rows have been written i.e. at the end of the frame, the required number of test range bits will have been generated and hence the majority logic now contains the correct range word information. This means that as the RAM can now be used for an output operation one less RAM is needed than would otherwise be required producing a saving of chip area and so price.

An alternative way of range recovery is to utilise a high speed processing system in order to calculate the correct range words during the time interval occupied by the frame alignment word, control bits, and auxiliary data. If the range bits could be calculated correctly during this interval, one less RAM is required than would otherwise be needed. Should this calculation period extend over into the transmitted frame alignment control bits and additional data interval, however, then an extra RAM would be necessary.

There exists a problem inherent in the conventional system when non-changing audio information (e.g. silence) is being. transmitted. In these circumstances, the sampling systems takes this stationary bit pattern (probably all "O") and multiplies it by a pseudo random sequence. This action creates false frame alignment code pulses. Frame alignment code pulses occur naturally anyway, since the probability of them occuring is 1 in 256, in one frame of information there are on average 2.8 frame alignment codes generated by chance. However, the frame alignment words are spaced at an interval of 728 clock cycles apart i.e. one frame. The detection system then waits for 728 clock cycles (1mS) before checking to see if the same bit pattern occurs. In this way the chance of getting successive FAW patterns is very low (1/256)ⁿ where n is the number of successive tries). However the action of the pseudo random sequence generator on static bit patterns not only creates a FAW but additionally creates it at exactly the right interval since an FAW is created at the same point in each frame after the true FAW. Under these circumstances, should a TV be turned on when there is a period of silence (or when in data transmission and where mono where the data is a constant bit stream), the stereo decoder chip could lock on to the false FAW rather than the true FAW in the signal. There is no way to distinguish that this was a false lock condition.

To overcome this problem, the system has an additional timing circuit included. If one considers the locking circuit to be in two parts, the first part is a FAW detection circuit and the second part a Co bit detector (effectively a digital phase lock loop). Then the normal action of lock would be: firstly the frame alignment code acquires lock and enables the Co detections circuit to lock on to the Co bit waveform; secondly, when the Co and FAW acquisition circuits indicate that both these signals are acquired, the receiver is allowed to proceed with decoding sound.

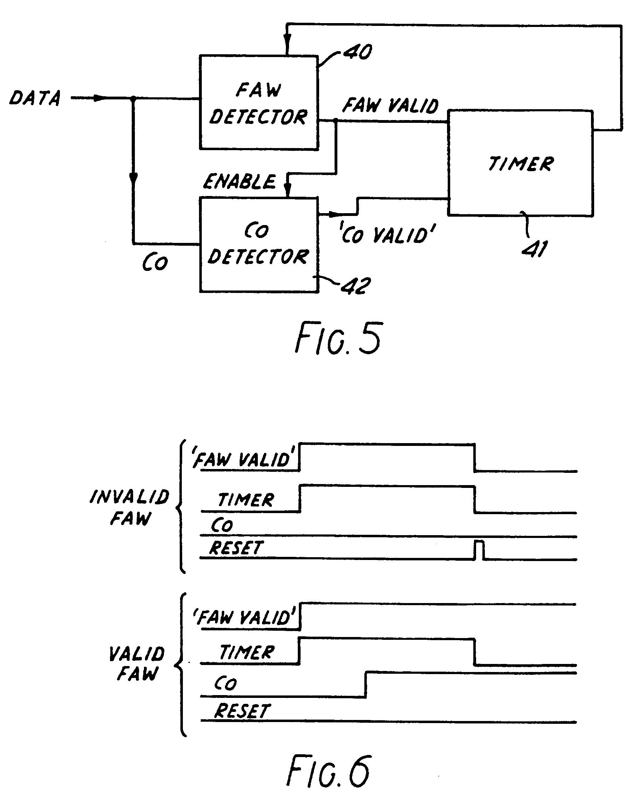

Under false lock conditions, the Co decoder would not lock on to a Co signal since this bit is now incorrectly positioned and the data going into the Co decoder is not the bit in the transmission sequence. Thus, information can be used to reset the FAW detection circuit. As shown in Figure 5, a FAW code circuit 40 generates an output indicating a valid frame alignment code pattern detection. This in turn starts a timing device 41 which times a period sufficient for the Co detector 42 to acquire lock under all useable signal conditions. At the end of this timing period, the Co detector is checked to see if a valid Co detection has taken place. If it has, no action is taken; but if it has not, the FAW detection circuitry is reset and a new frame alignment lock sequence initiated. Figure 6 shows appropriate waveforms.

## Claims

1. Method for transmission of an audio/data signal to accompany a transmitted video signal, in which method the audio/data signal comprises a stream of digital elements (bits) formed into a plurality of frames, each frame (Fig. 2) comprising at least four sections, namely a section (FAW) to indicate the start of a frame, a section (C) to contain control information, a section (AD) to contain additional data and a section (A1, B1, A2,..., B31, A32, B32) to contain the audio/data information of the audio/data signal,
and whereby the audio/data information section of said audio/data signal is coded as multiple bit sample words, each word having an associated parity bit whereby the parity bit (P) is added to the end of each said multiple sample word of the audio signal for error detection and scalefactor signalling purposes and is transmitted after that sample word, the number of bits per sample word being 10 when the parity bit is not regarded,
and whereby only the audio/data information section (A1, B1, A2,..., B31, A32, B32) including the parity bit (P) but not the indication (FAW), additional data (AD) and control (C) section is transmitted in an interleaved format in which in each frame all the digital elements within the whole audio/data information section are in a different but related sequence (TABLE 1),
each frame consisting of 728 bits, wherein the section to contain the audio/data information has a length of 704 bits and the interleaving depth in this section equals four times the number of bits of the multiple bit sampling word length including said associated parity bit.

2. Method according to claim 1, wherein the audio signal is sampled at 32kHz and coded initially with the resolution of 14 bits per sample and whereby the number of bits per sample is reduced using near instantaneous companding.

3. Method according to claim 1 or 2, wherein the section to contain the audio/data information is interleaved according to the following table: 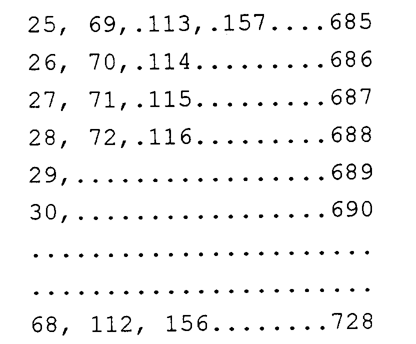 in which the numbers relate to the original position before interleaving.

4. Television receiver (3) for a transmission system (1) to provide an audio/data signal to accompany a transmitted video signal, the television receiver (3) comprising:
- means (7) to input a transmitted audio/data signal comprising a stream of digital elements (bits) formed into a plurality of frames, each frame comprising at least four sections, namely a section (FAW) to indicate the start of a frame, a section (C) to contain control information, a section (AD) to contain additional data and a section (A1, B1, A2, ..., B31, A32, B32) to contain the audio/data information of the audio/data signal,
- means (13) to output the resultant audio/data signal in association with a video signal, whereby the audio/data information section of the received audio/data signal is coded as multiple bit sample words, each word having an associated parity bit which is added to each said multiple sample word of the audio signal for error detection and scale factor signalling purposes and is received after that sample word, the number of bits per sample word being 10 when the parity bit is not regarded, and whereby the television receiver further comprises:
- means (9) to de-interleave only the audio/data information section (A1, B1, A2, ..., B31, A32, B32) including the parity bit (P) but not the indication (FAW), additional data (AD) and control (C) section of a frame, the de-interleave means (9) comprising means to change the sequence of the digital elements (bits) of the audio/data information section within each whole frame as transmitted according to a predetermined relationship (TABLE 1) such as to produce a sequence for output by the television receiver (3),
each frame consisting of 728 bits, wherein the section to contain the audio/data information has a length of 704 bits and the de-interleaving depth in this section equals four times the number of bits of the multiple bit sampling word length including said associated parity bit.

5. Television receiver according to claim 4, wherein the de-interleave means (9) comprise storage means (20) to hold a plurality of frames of audio/data signals, counter means (21, 22, 23) to effect input of audio/data signals to, and the output from, the storage means (20), a logic-circuit means to effect re-configuring of the counter means between one mode for effecting input of signals to the storage means and another mode for effecting their output therefrom.

6. Television receiver (3) according to claim 4 or 5, wherein the television receiver comprises: means (10) to determine a companding range value for a frame of the audio/data signal, companding range determining means processing the frame as it is input thereto; and means to input the resultant audio/data signal in association with the video signal.

7. Television receiver according to one of the claims 4 to 6, wherein the television receiver comprises means (12) to compare after transmission the non-interleaved sections of a number of adjacent frames to determine any error in the non-interleaved sections.

8. Transmitter (2) for a transmission system (1) to provide an audio/data signal to accompany a video signal, the transmitter (2) comprising:
- means (7) to input a transmitted audio/data signal comprising a stream of digital elements (bits) formed into a plurality of frames, each frame comprising at least four sections, namely a section (FAW) to indicate the start of a frame, a section (C) to contain control information, a section (AD) to contain additional data and a section (A1, B1, A2, ..., B31, A32, B32) to contain the audio/data information,
whereby the audio/data information section of said audio/data signal is coded as multiple bit sample words, each word having an associated parity bit which is added to each said multiple sample word of the audio signal for error detection and scale factor signalling purposes and is transmitted after that sample word, the number of bits per sample word being 10 when the parity bit is not regarded, and whereby the transmitter (2) comprises:
- means (5) to interleave only the audio/data information section (A1, B1, A2, ..., B31, A32, B32) including the parity bit (P) but not the indication (FAW), additional data (AD) and control (C) section of a frame, the interleave means (5) comprising means to change the sequence of the digital elements of the audio/data information section within each whole frame as input according to a predetermined relationship (TABLE 1) such as to produce a sequence for transmission,
each frame consisting of 728 bits, wherein the section to contain the audio/data information has a length of 704 bits and the interleaving depth in this section equals four times the number of bits of the multiple bit sampling word length including said associated parity bit.

9. Transmitter according to claim 8, wherein the interleave means comprises storage means to hold a plurality of frames of audio/data signals, counter means to effect input of audio/data signals to, and their output from, the storage means, and logic-circuit means to effect reconfiguring of the counter means between one mode for effecting input of the signals to the storage means and another mode for effecting their output therefrom.

10. Audio/data signal to accompany a transmitted video signal, in which the audio/data signal comprises a stream of digital elements (bits) formed into a plurality of frames, each frame (Fig. 2) comprising at least four sections, namely a section (FAW) to indicate the start of a frame, a section (C) to contain control information, a section (AD) to contain additional data and a section (A1, B1, A2, ..., B31, A32, B32) to contain the audio/data information of the audio/data signal, whereby the audio/data information section of said audio/data signal is coded as multiple bit sample words, each word having an associated parity bit whereby the parity bit (P) is added to the end of each said multiple sample word of audio/data information for error detection and scalefactor signalling purposes and is arranged after that sample word, the number of bits per sample word being 10 when the parity bit is not regarded,
and whereby only the audio/data information section (A1, B1, A2, ..., B31, A32, B32) including the parity bit (P) but not the indication (FAW), additional data (AD) and control (C) section is interleaved so that in each frame all the digital elements within the whole audio/data information section are in a different but related sequence (TABLE 1),
each frame consisting of 728 bits, wherein the section to contain the audio/data information has a length of 704 bits and the interleaving depth in this section equals four times the number of bits of the multiple bit sampling word length including said associated parity bit.

11. Application of the audio/data signal according to claim 10 in a television receiver for producing a perceivable audio/data signal.

## Patentansprüche

1. Verfahren zur Übertragung eines Audio/Daten-Signals zu einem übertragenen Videosignal, in welchem Verfahren das Audio/Daten-Signal einen Strom von Digital-Elementen (Bits) enthält, die eine Vielzahl von Rahmen bilden, wobei jeder Rahmen (Fig. 2) mindestens vier Abschnitte enthält, nämlich einen Abschnitt (FAW) zur Anzeige des Starts eines Rahmens, einen Abschnitt (C) mit Steuer-Informationen, einen Abschnitt (AD) mit Zusatzdaten und einen Abschnitt (A1, B1, A2, ..., B31, A32, B32), der die Audio/Daten-Information des Audio/Daten-Signals enthält,
wobei der Audio/Daten-Signal-Abschnitt des Audio/Daten-Signals als Multibit-Abtastworte kodiert ist und jedem dieser Worte ein Paritätsbit (P) zugeordnet ist, wobei das Paritätsbit (P) an das Ende eines jeden der Multibit-Abtastworte des Audiosignals angehängt ist und zur Fehler-Detektion und für Skalenfaktor-Signalisierungszwecke dient und nach dem Abtastwort übertragen wird, und wobei ohne Berücksichtigung des Paritätsbits die Anzahl der Bits per Abtastwort 10 ist,
und wobei nur der Audio/Daten-Informations-Abschnitt (A1, B1, A2, ..., B31, A32, B32) einschließlich des Paritätsbits (P), aber nicht der Anzeige-(FAW), Zusatzdaten-(AD) und Steuer-(C)-Abschnitt in einem verschachtelten Format übertragen wird, bei dem in jedem Rahmen alle digitalen Elemente innerhalb des gesamten Audio-/Daten-Informations-Abschnitts in einer unterschiedlichen aber zusammenhängenden Reihenfolge vorliegen (Tabelle 1), wobei jeder Rahmen aus 728 Bits besteht, der die Audio/Daten-Information enthaltende Abschnitt eine Länge von 704 Bit hat und die Verschachtelungs-Tiefe in diesem Abschnitt gleich der vierfachen Anzahl der Bits der Multibit-Abtastwortlänge einschließlich des zugehörigen Paritätsbits ist.

2. Verfahren nach Anspruch 1, bei dem das Audio-Signal mit 32kHz abgetastet und mit einer Anfangs-Auflösung von 14 Bit pro Abtastwert kodiert wird, wobei die Zahl der Bits pro Abtastwert durch die Benutzung einer Near-Instantaneous-Kompandierung reduziert wird.

3. Verfahren nach Anspruch 1 oder 2, bei dem der Abschnitt mit der Audio/Daten-Information entsprechend der folgenden Tabelle verschachtelt wird: 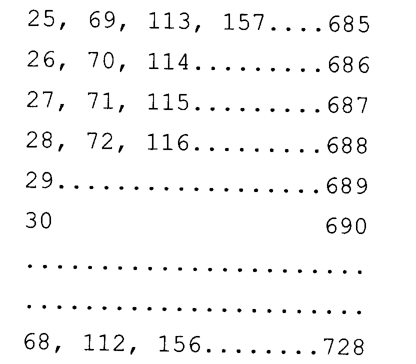 wobei die Zahlen sich auf die ursprüngliche Position vor der Verschachtelung beziehen.

4. Fernseh-Empfänger (3) für ein Übertragungssystem (1) zur Bereitstellung eines Audio/Daten-Signals welches zu einem übertragenen Videosignal gehört, wobei der Fernseh-Empfänger (3) enthält:
- Mittel (7) zur Eingabe eines übertragenen Audio/Daten-Signals enthaltend einen Strom von Digital-Elementen (Bits), die eine Vielzahl von Rahmen bilden, wobei jeder Rahmen mindestens vier Abschnitte enthält, nämlich einen Abschnitt (FAW) zur Anzeige des Starts eines Rahmens, einen Abschnitt (C) mit Steuer-Informationen, einen Abschnitt (AD) mit Zusatzdaten und einen Abschnitt (A1, B1, A2, ..., B31, A32, B32), der die Audio/Daten-Information des Audio/Daten-Signals enthält;
- Mittel (13) zur Ausgabe des resultierenden Audio/Daten-Signals im Zusammenhang mit einem Videosignal, wobei der Audio/Daten-Signal-Abschnitt des empfangenen Audio/Daten-Signals als Multibit-Abtastworte kodiert ist und jedem dieser Worte ein Paritätsbit (P) zugeordnet ist, wobei das Paritätsbit (P) an ein jedes der Multibit-Abtastworte des Audiosignals angehängt ist und zur Fehler-Detektion und für Skalenfaktor-Signalisierungszwecke
dient und nach dem Abtastwort empfangen wird, und wobei ohne Berücksichtigung des Paritätsbits die Anzahl der Bits per Abtastwort 10 ist und der Fernseh-Empfänger ferner enthält:
- Mittel (9) zum Entschachteln nur des Audio/Daten-Informations-Abschnitts (A1, B1, A2, ..., B31, A32, B32) einschließlich des Paritätsbits (P), aber nicht des Anzeige-(FAW), Zusatzdaten-(AD) und Steuer-(C)-Abschnitts eines Rahmens, wobei die Entschachtelungs-Mittel (9) Mittel enthalten zur Änderung der Reihenfolge der digitalen Elemente des Audio-/Daten-Informations-Abschnitts innerhalb jedes ganzen, entsprechend eines vorbestimmten Zusammenhangs (Tabelle 1) übertragen Rahmens, um eine Reihenfolge für die Ausgabe durch den Fernseh-Empfänger (3) zu produzieren,
wobei jeder Rahmen aus 728 Bits besteht, der die Audio/Daten-Information enthaltende Abschnitt eine Länge von 704 Bit hat und die Entschachtelungs-Tiefe in diesem Abschnitt gleich der vierfachen Anzahl der Bits der Multibit-Abtastwortlänge einschließlich des zugehörigen Paritätsbits ist.

5. Fernseh-Empfänger nach Anspruch 4, bei dem die Entschachtelungs-Mittel (9) enthalten: Speichermittel (20) zum Speichern einer Vielzahl von Rahmen von Audio/Daten-Signalen, Zählermittel (21, 22, 23) zur Eingabe des Audio/Daten-Signals in die Speichermittel (20) und zur Ausgabe von den Speichermitteln (20), Logik-Schaltungsmittel zum Bewirken einer Rekonfiguration der Zählermittel zwischen einem Modus zur Eingabe der Signale in die Speichermittel und einem anderen Modus zu deren Ausgabe daraus.

6. Fernseh-Empfänger nach Anspruch 4 oder 5, der enthält: Mittel (10) zum Bestimmen des Kompandierungsbereich-Werts für einen Rahmen des Audio/Daten-Signals, Kompandierungsbereich-Bestimmungsmittel zum Verarbeiten des Rahmens entsprechend seiner Eingabe darin, und Mittel zur Eingabe des resultierenden Audio/Daten-Signals im Zusammenhang mit dem Videosignal.

7. Fernseh-Empfänger nach einem der Ansprüche 4 bis 6, der Mittel (12) enthält, um nach der Übertragung nicht verschachtelter Abschnitte eine Anzahl benachbarter Rahmen zu vergleichen um mögliche Fehler in den nicht verschachtelten Abschnitten zu ermitteln.

8. Sender (2) für ein Übertragungssystem (1) zur Bereitstellung eines Audio/Daten-Signals, welches zu einem übertragenen Videosignal gehört, wobei der Sender (2) enthält:
- Mittel (7) zur Eingabe eines übertragenen Audio/Daten-Signals bestehend aus einem Strom von Digital-Elementen (Bits), die eine Vielzahl von Rahmen bilden, wobei jeder Rahmen mindestens vier Abschnitte enthält, nämlich einen Abschnitt (FAW) zur Anzeige des Starts eines Rahmens, einen Abschnitt (C) mit Steuer-Informationen, einen Abschnitt (AD) mit Zusatzdaten und einen Abschnitt (A1, B1, A2, ..., B31, A32, B32), der die Audio/Daten-Information des Audio/Daten-Signals enthält,
wobei der Audio/Daten-Signal-Abschnitt des empfangenen Audio/Daten-Signals als Multibit-Abtastworte kodiert ist und jedem dieser Worte ein Paritätsbit (P) zugeordnet ist, wobei das Paritätsbit (P) an ein jedes der Multibit-Abtastworte des Audiosignals angehängt ist und zur Fehler-Detektion und für Skalenfaktor-Signalisierungszwecke dient und nach dem Abtastwort übertragen wird, und wobei ohne Berücksichtigung des Paritätsbits die Anzahl der Bits per Abtastwort 10 ist und der Sender (2) enthält:
- Mittel (5) zum Verschachteln nur des Audio/Daten-Informations-Abschnitts (A1, B1, A2, ..., B31, A32, B32) einschließlich des Paritätsbits (P), aber nicht des Anzeige-(FAW), Zusatzdaten-(AD) und Steuer-(C)-Abschnitts eines Rahmens, wobei die Verschachtelungs-Mittel (5) Mittel enthalten zur Änderung der Reihenfolge der digitalen Elemente des Audio-/Daten-Informations-Abschnitts innerhalb jedes ganzen, entsprechend eines vorbestimmten Zusammenhangs (Tabelle 1) Eingangs-Rahmens, um eine Reihenfolge für die Übertragung zu produzieren,
wobei jeder Rahmen aus 728 Bits besteht, der die Audio/Daten-Information enthaltende Abschnitt eine Länge von 704 Bit hat und die Verschachtelungs-Tiefe in diesem Abschnitt gleich der vierfachen Anzahl der Bits der Multibit-Abtastwortlänge einschließlich des zugehörigen Paritätsbits ist.

9. Sender nach Anspruch 8, bei dem die Entschachtelungs-Mittel (9) enthalten: Speichermittel zum Speichern einer Vielzahl von Rahmen von Audio/Daten-Signalen, Zählermittel zur Eingabe des Audio/Daten-Signals in die Speichermittel und zur Ausgabe von den Speichermitteln, Logik-Schaltungsmittel zum Bewirken einer Rekonfiguration der Zählermittel zwischen einem Modus zur Eingabe der Signale in die Speichermittel und einem anderen Modus zu deren Ausgabe daraus.

10. Audio/Daten-Signal zu einem übertragenen Videosignal, wobei das Audio/Daten-Signal einen Strom von Digital-Elementen (Bits) enthält, die eine Vielzahl von Rahmen bilden, wobei jeder Rahmen (Fig. 2) mindestens vier Abschnitte enthält, nämlich einen Abschnitt (FAW) zur Anzeige des Starts eines Rahmens, einen Abschnitt (C) mit Steuer-Informationen, einen Abschnitt (AD) mit Zusatzdaten und einen Abschnitt (A1, B1, A2, ..., B31, A32, B32), der die Audio/Daten-Information des Audio/Daten-Signals enthält,
wobei der Audio/Daten-Signal-Abschnitt des Audio/Daten-Signals als Multibit-Abtastworte kodiert ist und jedem dieser Worte ein Paritätsbit (P) zugeordnet ist, wobei das Paritätsbit (P) an das Ende eines jeden der Multibit-Abtastworte des Audiosignals angehängt ist und zur Fehler-Detektion und für Skalenfaktor-Signalisierungszwecke dient und nach dem Abtastwort angeordnet ist, und wobei ohne Berücksichtigung des Paritätsbits die An-zahl der Bits per Abtastwort 10 ist,
und wobei nur der Audio/Daten-Informations-Abschnitt (A1, B1, A2, ..., B31, A32, B32) einschließlich des Paritätsbits (P), aber nicht der Anzeige-(FAW), Zusatzdaten-(AD) und Steuer-(C)-Abschnitt verschachtelt ist, so daß in jedem Rahmen alle digitalen Elemente innerhalb des gesamten Audio-/Daten-Informations-Abschnitts in einer unterschiedlichen, aber zusammenhängenden Reihenfolge vorliegen (Tabelle 1),
wobei jeder Rahmen aus 728 Bits besteht, der die Audio/Daten-Information enthaltende Abschnitt eine Länge von 704 Bit hat und die Verschachtelungs-Tiefe in diesem Abschnitt gleich der vierfachen Anzahl der Bits der Multibit-Abtastwortlänge einschließlich des zugehörigen Paritätsbits ist.

11. Verwendung des Audio/Daten-Signals nach Anspruch 10 in einem Fernseh-Empfänger zum Erzeugen eines wahrnehmbaren Audio/Daten-Signals.

## Revendications

1. Procédé pour la transmission d'un signal son/de données pour accompagner un signal vidéo transmis dans lequel le signal son/de données comprend un train d'éléments numériques (bits) formés en une pluralité de trames, chaque trame (figure 2) comprenant au moins quatre sections, en particulier une section (FAW) pour indiquer le début d'une trame, une section (C) pour contenir des informations de commande, une section (AD) pour contenir des données supplémentaires et une section (A1, B1, A2, ..., B31, A32, B32) pour contenir les informations son/de données du signal son/de données,
la section information son/de données dudit signal son/de données étant codé comme des mots d'échantillon de bit multiple, chaque mot ayant un bit de parité associé, le bit de parité (P) étant ajouté à la fin de chaque mot d'échantillon multiple du signal son à des fins de détection d'erreurs et de signalisation de facteur de cadrage et étant transmis après ce mot d'échantillon, le nombre de bits par mot d'échantillon étant de dix lorsque le bit de parité n'est pas pris en compte,
et seule la section d'informations son/de données (A1, B1, A2, ..., B31, A32, B32) comprenant le bit de parité (P) mais pas l'indication (FAW), les données supplémentaires (AD) et la section de commande (C) étant transmise dans un format entrelacé dans lequel dans chaque trame tous les éléments numériques à l'intérieur de toute la section d'informations son/de données sont dans une séquence différente mais apparentée (tableau 1),
chaque trame comprenant 728 bits, la section contenant les informations son/de données ayant une longueur de 704 bits, et la profondeur d'entrelacement dans cette section étant égale à quatre fois le nombre de bits de la longueur du mot d'échantillon de bit multiple incluant ledit bit de parité associé.

2. Procédé selon la revendication 1, dans lequel le signal son est échantillonné à 32kHz et codé initialement avec la résolution de 14 bits par échantillon, le nombre de bits par échantillon étant réduit à 10 en utilisant une compression-expansion presque instantanée.

3. Procédé selon la revendication 1 ou 2, dans lequel la section pour contenir les informations son/de données est entrelacée selon le tableau suivant: 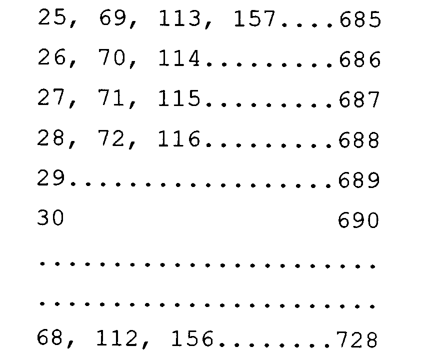 dans lequel les numéros se référent à la position d'origine avant entrelacement.

4. Récepteur de télévision (3) pour un système de transmission (1) pour fournir un signal son/de données pour accompagner un signal vidéo transmis, le récepteur de télévision (3) comprenant:
- des moyens (7) pour entrer un signal son/de données transmis comprenant un train d'éléments numériques (bits) formés en une pluralité de trames, chaque trame comprenant au moins quatre sections, en particulier une section (FAW) pour indiquer le début d'une trame, une section (C) pour contenir des informations de commande, une section (AD) pour contenir des données supplémentaires et une section (A1, B1, A2, ..., B31, A32, B32) pour contenir les informations son/de données du signal son/de données,
- des moyens (13) pour sortir le signal son/de données résultant associé à un signal vidéo, la section information son/de données du signal son/de données reçu étant codée comme des mots d'échantillon de bit multiple, chaque mot ayant un bit de parité associé qui est ajouté à chaque mot d'échantillon multiple du signal son à des fins de détection d'erreurs de signalisation et de facteur de cadrage, et étant reçu après ce mot d'échantillon, le nombre de bits par mot d'échantillon étant de dix lorsque le bit de parité n'est pas pris en compte, et le récepteur de télévision comprenant:
- des moyens (9) pour désentrelacer seulement la section d'informations son/de données (A1, B1, A2, ..., B31, A32, B32) comprenant le bit de parité (P) mais pas la section d'indication (FAW), les données supplémentaires (AD) et la section de commande (C) d'une trame, les organes de désentrelacement (9) comprenant des moyens pour changer la séquence des éléments numériques (bits) de la section d'information son/de données à l'intérieur de chaque trame entière telle qu'elle est transmise selon des relations prédéterminées (tableau 1) de manière à produire une séquence pour la sortie par le récepteur de télévision (3),
chaque trame comprenant 728 bits, la section contenant les informations son/de données ayant une longueur de 704 bits, et la profondeur d'entrelacement dans cette section étant égale à quatre fois le nombre de bits de la longueur du mot d'échantillon de bit multiple incluant ledit bit de parité associé.

5. Récepteur de télévision selon la revendication 4, dans lequel les organes de désentrelacement (9) comprennent des organes de mémorisation (20) pour contenir une pluralité de trames de signaux son/de données, des compteurs (21, 22, 23) pour effectuer l'entrée de signaux son/de données dans les organes de mémorisation (20) et la sortie à partir de ceux-ci, un circuit logique pour effectuer la nouvelle configuration du compteur entre un mode pour effectuer l'entrée des signaux dans les organes de mémorisation et un autre mode pour effectuer leur sortie à partir de ceux-ci.

6. Récepteur de télévision (3) selon la revendication 4 ou 5, dans lequel le récepteur de télévision comprend des organes (10) pour déterminer une valeur de plage de compression-expansion (40, 41, 42) pour une trame du signal son/de données, des moyens de détermination de la plage de compression-expansion (40, 41, 42) qui traitent la trame telle qu'elle y est entrée et des organes pour entrer le signal son/de données résultant en association avec le signal vidéo.

7. Récepteur de télévision selon l'une des revendications 4 à 6, dans lequel le récepteur de télévision comprend des organes (12) pour comparer après transmission les sections non entrelacées d'un nombre de trames adjacentes pour déterminer toute erreur dans les sections non entrelacées.

8. Transmetteur (2) pour un système de transmission (1) pour fournir un signal son/de données pour accompagner un signal vidéo, le transmetteur (2) comprenant:
- des moyens (7) pour entrer un signal son/de données transmis comprenant un train d'éléments numériques (bits) formés en une pluralité de trames, chaque trame (figure 2) comprenant au moins quatre sections, en particulier une section (FAW) pour indiquer le début d'une trame, une section (C) pour contenir des informations de commande, une section (AD) pour contenir des données supplémentaires et une section (A1, B1, A2, ..., B31, A32, B32) pour contenir les informations son/de données,
la section d'informations son/de données du signal son/de données étant codée comme des mots d'échantillon de bits multiple, chaque mot ayant un bit de parité associé qui est ajouté au mot d'échantillon multiple du signal son à des fins de détection d'erreurs et de signalisation du facteur de cadrage, et étant transmis après ce mot d'échantillon, le nombre de bits par mot d'échantillon étant de dix lorsque le bit de parité n'est pas pris en compte, et le transmetteur (2) comprenant:
- des moyens (5) pour entrelacer seulement la section d'informations son/de données (A1, B1, A2, ..., B31, A32, B32) comprenant le bit de parité (P) mais pas la section d'indication (FAW), les données supplémentaires (AD) et la section de commande (C) d'une trame, les organes d'entrelacement (5) comprenant des moyens pour changer la séquence des éléments numériques de la section d'informations son/de données à l'intérieur de chaque trame entière telle qu'elle est entrée selon des relations prédéterminées (tableau 1) de manière à produire une séquence pour transmission,
chaque trame comprenant 728 bits, la section contenant les informations son/de données ayant une longueur de 704 bits, et la profondeur d'entrelacement dans cette section étant égale à quatre fois le nombre de bits de la longueur du mot d'échantillon de bit multiple incluant ledit bit de parité associé.

9. Transmetteur selon la revendication 8, dans lequel les organes d'entrelacement comprennent des organes de mémorisation pour contenir une pluralité de trames de signaux son/de données, des compteurs pour effectuer l'entrée des signaux son/de données dans les organes de mémorisation et la sortie à partir de ceux-ci, un circuit logique pour effectuer la nouvelle configuration des compteurs entre un mode pour effectuer l'entrée des signaux dans les organes de mémorisation et un autre mode pour effectuer leur sortie à partir de ceux-ci.

10. Signal son/de données pour accompagner un signal vidéo transmis dans lequel le signal son/de données comprend un train d'éléments numériques (bits) formés en une pluralité de trames, chaque trame (figure 2) comprenant au moins quatre sections, en particulier une section (FAW) pour indiquer le début d'une trame, une section (C) pour contenir des informations de commande, une section (AD) pour contenir des données supplémentaires et une section (A1, B1, A2, ..., B31, A32, B32) pour contenir les informations son/de données du signal son/de données,
la section d'information son/de données du signal son/de données étant codée comme des mots d'échantillon de bit multiple, chaque mot ayant un bit de parité associé, le bit de parité (P) étant ajouté à la fin de chaque mot d'échantillon multiple des informations son/de données à des fins de détection d'erreurs et de signalisation du facteur de cadrage et étant arrangé après ce mot d'échantillon, le nombre de bits par mot d'échantillon étant de dix lorsque le bit de parité n'est pas pris en compte,
seule la section d'informations son/de données (A1, B1, A2, ..., B31, A32, B32) comprenant le bit de parité (P) mais pas d'indication (FAW), les données supplémentaires (AD) et la section de commande (C) étant entrelacées si bien que dans chaque trame tous les éléments numériques à l'intérieur de toute la section d'informations son/de données sont dans une séquence différente mais apparentée (tableau 1),
chaque trame comprenant 728 bits, la section contenant les informations son/de données ayant une longueur de 704 bits, et la profondeur d'entrelacement dans cette section étant égale à quatre fois le nombre de bits de la longueur du mot d'échantillon de bit multiple incluant ledit bit de parité associé.

11. Application du signal son/de données selon la revendication 10 dans un récepteur de télévision pour produire un signal son/de données perceptible.
